# EUROPÄISCHE PATENTSCHRIFT

(11) **EP 0 801 291 B1**
(45) Veröffentlichungstag und Bekanntmachung des Hinweises auf die Patenterteilung: **03.03.2004**
(21) Anmeldenummer: 97105789.8
(22) Anmeldetag: 08.04.1997
(51) Int. Cl.: G01F 15/00, G01F 15/06, G06M 1/274

(54) **Verbrauchszähler mit magnetischem Impulsgeber**
Flowmeter with magnetic pulse transmitter
Débitmètre avec un émetteur d'impulsions magnétiques

(30) Priorität: 12.04.1996 DE 29606700 U; 09.07.1996 DE 29611946 U
(43) Veröffentlichungstag der Anmeldung: 15.10.1997
(73) Patentinhaber: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(56) Entgegenhaltungen:
- EP-A- 0 516 509
- CH-A- 560 904
- DE-A- 2 455 266
- FR-A- 2 274 979
- GB-A- 2 101 782
- G.E.C. JOURNAL, Bd. 34, Nr. 2, 1976, Seiten 84-86, XP002016234 B.H. STONEHOUSE,E.A.: "REMOTE READING OF REGISTERS"

## Beschreibung

Die Erfindung betrifft einen Verbrauchszähler mit einem von einem Verbrauchsgeber mit einem vorbestimmten Mindestantriebsmoment angetriebenen mechanischen Zählwerk, mit dem ein magnetischer Impulsgeber verbunden ist.

Der Verbrauchszähler, der beispielsweise für die Abrechnung von Elektrizitäts-, Gas-, Wärme- oder Wasserverbrauch ausgebildet ist, weist einen Verbrauchsgeber auf, der den Verbrauch analog durch eine Umdrehungszahl vorgibt. Bei einem Mengenzähler kann er z.B. von einem Turbinen- oder Flügelrad gebildet sein. Die ggf. durch ein Untersetzungsgetriebe herabgesetzte Umdrehungszahl dieses Gebers wird dem mechanischen Zählwerk zugeführt, dessen Aufgabe darin besteht, eine optische Anzeige des Verbrauchs zu liefern. Um eine Fernauslesung des Meßergebnisses zu ermöglichen, ist eine Schaltwelle des Zählwerks oder des vorgeschalteten Getriebes oder eine Ziffernrolle mit einem am Umfang magnetisierten Impulsgeber versehen, in dessen Wirkbereich ein von dem wechselnden Magnetfeld des Impulsgebers beeinflußbarer Impulsempfänger vorgesehen werden kann, beispielsweise ein Reedrelais, ein Wieganddrahtschalter oder ein Hallgenerator, der den empfangenen Impuls als Signal an eine Fernanzeige- oder Auswerteeinrichtung weiterleitet. Ein Nachteil dieser Anordnung ist die Beeinflußbarkeit des Zählers durch ein von außen angelegtes Fremdmagnetfeld, das den magnetischen Impulsgeber und damit das Zählwerk festhält oder bremst. Abschirmungen aus Metall schaffen nur begrenzt Abhilfe und lassen sich nicht so anordnen, daß das Sichtfeld für die Ablesung nicht eingeschränkt wird.

Es ist ein Verbrauchszähler bekannt (FR-A-2274979), der ein mechanisches Zählwerk aufweist, das magnetisch gekuppelt ist mit einem zweiten mechanischen Zählwerk, welches zum Zwecke der Fernablesung von Zeit zu Zeit zurückgedreht wird, wobei der seit der letzten Fernablesung angesammelte Teil-Zählerstand übertragen wird. Auch bei dieser Ausführung können die magnetischen Kupplungsteile durch ein von außen aufgeprägtes Magnetfeld festgehalten werden.

Der Erfindung liegt daher die Aufgabe zugrunde, einen Verbrauchszähler der genannten Art zu schaffen, dessen mechanisches Zählwerk weniger leicht von außen beeinflußbar ist.

Die erfindungsgemäße Lösung besteht in den Merkmalen des Anspruchs 1. Zwischen dem Zählwerk und dem Impulsgeber ist eine normalerweise schlupf freie Schlupfkupplung angeordnet, die im Falle der Einwirkung eines äußeren Magnetfeldes gelöst wird, so daß ihr Kupplungsmoment geringer wird als das dem Mindestantriebsmoment entsprechende Moment. Unter diesem ist das an der Kupplung wirkende Moment zu verstehen, das unter Berücksichtigung einer zwischen dem Verbrauchsgeber und der Kupplung vorhandenen Untersetzung und/oder Reibung dazu geeignet wäre, das Zählwerk festzuhalten oder in unzulässiger Weise zu bremsen.

Aus der Differenz der mechanischen Anzeige und der ggf. vorhandenen Fernanzeige oder aus dem Verhalten besonderer Manipulationsdetektoren läßt sich dann feststellen, daß eine Manipulation stattgefunden hat, und es kann der wahre Verbrauch geschätzt werden.

Der impulsgeberseitige Kupplungsteil ist an dem zählwerksseitigen Kupplungsteil durch eine nachgiebige Kraft derart schwach axial gehalten, daß er sich unter der Einwirkung des äußeren Magnetfelds davon löst. Er kann ringförmig ausgeführt sein und gegenüber dem zählwerksseitigen Kupplungsteil derart axial verschiebbar sein, daß er sich unter dem Fremdmagnetfeld von diesem löst. Zu diesem Zweck ist der zählwerksseitige Kupplungsteil in der Regel so ausgebildet, daß er mit einer Stirnseite des als Impulsgeber dienenden Rings zusammenwirkt. Jedoch können die beiden Teile auch über die äußere oder innere Umfangsfläche des Impulsgeberrings zusammenwirken. Zwischen dem Impulsgeberring und dem Gehäuse ist so viel Spiel vorhanden, daß sich der Impulsgeberring unter dem Einfluß des Fremdmagnetfeldes so weit von dem zählwerksseitigen Kupplungsteil entfernen kann, daß das zwischen den beiden Teilen wirkende Kupplungsmoment unter die Schwelle des Mindestantriebsmoments sinkt. Wenn einer der beiden Teile nicht permanentmagnetisch ist, genügt dafür ein so geringes Abheben des Impulsgeberrings, daß der Körperkontakt aufgehoben ist. Es ist vorteilhaft, obwohl nicht unbedingt erforderlich, daß der zählwerksseitige Kupplungsteil als Rotationskörper (beispielsweise Kreisscheibe) ausgebildet ist, damit das nach dem Abheben des impulsgeberseitigen Kupplungsteils ggf. noch verbleibende Reibmoment über den Umdrehungswinkel konstant bleibt.

Die Konstruktion kann außerordentlich einfach sein, weil bei Ausbildung des Impulsgebers als permanentmagnetischer Ring dieser den einen Kupplungsteil bildet und der andere Kupplungsteil lediglich eine ferromagnetische, fest mit dem Zählwerk bzw. einem Teil desselben verbundene Scheibe oder dergleichen sein kann. Zweckmäßigerweise wird eine handelsübliche Federklemmscheibe verwendet, die auf die Zählwerkswelle oder die Nabe einer Zahlenrolle aufgeschoben werden kann.

In den vorangehenden Ausführungen wird vorausgesetzt, daß das Störmagnetfeld so gerichtet ist, daß es den impulsgeberseitigen Kupplungsteil vom zählwerksseitigen Kupplungsteil abheben will. Das ist auch dann der Fall, wenn das Störmagnetfeld schräg mit axialer Feldkomponente angeordnet ist. Wenn man auch die Möglichkeit einer radialen Störfeldeinwirkung berücksichtigt, kann an die Stelle einer ausschließlich axialen Verschiebung des impulsgeberseitigen Kupplungsteils eine radiale Verschiebung treten. Damit diese Bewegung dazu führt, daß die die Reibhaftung zwischen den Kupplungsteilen vermittelnden Kupplungsflächen voneinander abgehoben werden, ist erfindungsgemäß an wenigstens einem der Kupplungsteile eine Schrägfläche vorgesehen, die mit dem anderen Kupplungsteil so zusammenwirkt, daß die Radialverschiebung sich mit einer axialen, entkuppelnden Bewegungskomponente verbindet.

Die Erfindung wird im folgenden näher unter Bezugnahme auf die Zeichnung erläutert, die vorteilhafte Ausführungsbeispiele veranschaulicht. Darin zeigen:
- Fig. 1: einen vergrößerten Teil-Längsschnitt durch eine erste Ausführungsform des Zählers,
- Fig. 2: einen Teil-Längsschnitt durch eine Abwandlung der ersten Ausführungsform und
- Fig. 3 bis 5: eine zweite Ausführungsform in unterschiedlichen Funktionsstadien.

In dem Gehäuse 1 und dem darin befindlichen Zahlenrollengehäuse 2 ist eine Zählwerkswelle 3 gelagert, auf der Zahlenrollen 4 gelagert und in nicht dargestellter, herkömmlicher Weise angetrieben sind. Ein Untersetzungsgetriebe 5 überträgt die Drehbewegung des nicht gezeigten, bekannten Verbrauchsgebers auf die Zählwerkswelle 3.

Auf der Außenseite des Gehäuses 1 ist eine Halterung 6 für einen Impulsempfänger 10 angeordnet, der dort vorgesehen wird, falls Fernübertragung des Meßergebnisses erwünscht ist.

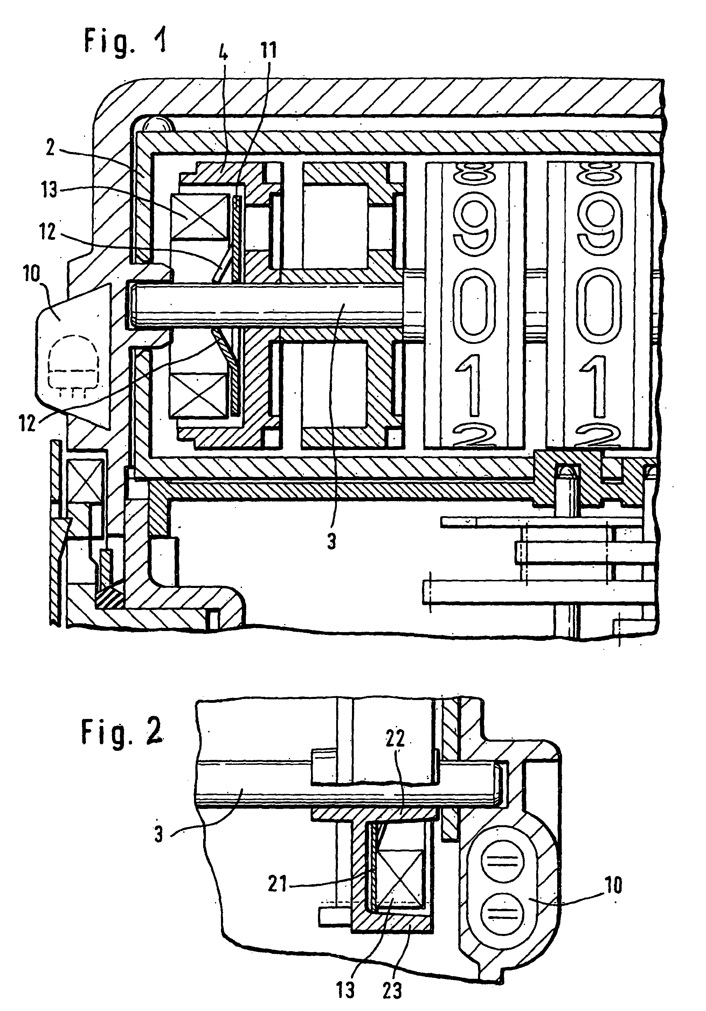

Gemäß der in Fig. 1 dargestellten ersten Ausführungsform ist auf die Zählwerkswelle 3 eine Federklemmscheibe 11 bekannter Art aus ferromagnetischem Metall aufgeschoben. Deren zentrische Wellendurchtrittsöffnung ist mit einer Mehrzahl von schräg angestellten Federzungen 12 versehen, durch die die Scheibe auf der Welle 3 unter Berücksichtigung der Kräfte, die an der Magnetkupplung wirken, schiebe- und drehfest festgehalten wird. Die Scheibe 11 bildet den zählwerksseitigen Kupplungsteil und wirkt als Mitnehmer für einen permanentmagnetischen Ring 13, der den Impulsgeber und den anderen Kupplungsteil bildet. Der Mitnehmer 11 ist so angeordnet, daß der an ihm anliegende Impulsgeber 13 im normalen Betrieb die vorbestimmte Relativlage zu dem Impulsempfänger 10 aufweist. Der Impulsgeber 13 wird dadurch an dem Mitnehmer 11 gehalten, daß der Mitnehmer 11 ferromagnetisch ist und der permanentmagnetische Impulsgeber 13 an seiner dem Mitnehmer zugewendeten Stirnfläche ein Magnetfeld bildet, das dazu ausreicht, ihn am Mitnehmer festzuhalten. Da seine Hauptaufgabe darin besteht, den Impulsempfänger 10 zu beeinflussen, wird das auf seiner inneren, dem Mitnehmer 11 zugewendeten Stirnfläche wirkende Magnetfeld in der Regel wesentlich kleiner sein als das zum Impulsempfänger 10 hin wirkende Magnetfeld. Dies ist auch deshalb zweckmäßig, weil die Haftung zwischen dem Impulsgeber 13 und dem Mitnehmer 11 gering sein soll, nämlich gerade so groß, daß der Impulsgeber 13 beim Gebrauch hinreichend sicher daran haftet. Es ist nicht erforderlich, daß das Magnetfeld so stark ist, daß der Mitnehmerring 13 im Fall von ungünstig gerichteten Stößen festgehalten wird, weil er anschließend unter der Wirkung des Magnetfelds in seine gewünschte Lage zurückspringen kann. In der dargestellten Ausführungsform wirkt die innere Stirnfläche des Impulsgeberrings 13 großflächig mit dem Mitnehmerring 11 zusammen. Um die Haftkraft so zu vermindern, daß der Impulsgeberring 13 im Falle eines Fremdmagnetfeldes zuverlässig von der Mitnehmerscheibe 11 abgehoben wird, kann aber eine solche Formgebung der Stirnfläche und/oder der Mitnehmerscheibe 11 vorgesehen sein, daß zwar eine hinreichende Reibkraft gesichert ist, aber ein unmittelbarer Kontakt nicht oder nur stellenweise vorhanden ist.

Demselben Ziel kann die Materialwahl dienen. Bei Wahl von Edelstahl für die Mitnehmerscheibe kann dessen Nickelgehalt einen geringen Ferromagnetismus bewirken, der eine entsprechend geringe Anziehungskraft zur Folge hat.

Außenseitig dem Impulsgeber 13 ist zwischen diesem und dem Zahlenrollengehäuse 2 ein gewisser Abstand vorhanden, der lediglich so groß zu sein braucht, daß der Impulsgeber 13 im Falle eines von außen einwirkenden Magnetfelds von der Mitnehmerscheibe 11 abgehoben werden kann und sich an die Innenfläche des Zahlenrollengehäuses 2 anlegen kann. Die dann zwischen der Mitnehmerscheibe 11 und dem Impulsgeber 13 sich einstellende Distanz ist so groß, daß das zwischen diesen beiden Teilen möglicherweise noch wirkende Brems- oder Kupplungsmoment geringer als das Mindestantriebsmoment für das mechanische Zählwerk ist. Dies läßt sich durch Bemessung des innenseitig vom Impulsgeber 13 wirkenden Magnetfelds, das Material des Mitnehmers 11 und die Gestaltung der zusammenwirkenden Flächen des Mitnehmers 11 und des Impulsgebers 13 leicht in der gewünschten Weise bestimmen. Der mechanische Zähler bleibt daher trotz Manipulation innerhalb der Fehlerkurve.

Der Impulsgeberring 13 wird beim Abheben von der Mitnehmerscheibe 11 und bei seinem Weg zurück an diese durch den Innendurchmesser der Zahlenrolle 4 geführt, innerhalb der er untergebracht ist. Sein Außendurchmesser ist auf den Innendurchmesser der Zahlenrolle mit entsprechendem Spiel abgestimmt. Er kann statt dessen oder zusätzlich auch durch die Welle 3 geführt sein, wenn seine Bohrung dem Wellendurchmesser angepaßt ist.

Der Impulsgeberring 13 und die Mitnehmerscheibe 11 können ferner so aufeinander abgestimmt sein, daß die Mitnehmerscheibe magnetischen Rückschluß für den Impulsgeberring bildet, so daß aufgrund der Feldlinienkonzentration zur aktiven Seite hin mit einer geringeren Masse permanentmagnetischen Materials gearbeitet werden kann.

Die erfindungsgemäße Schalteinrichtung kann wahlweise in der Anfangs- oder in der Endrolle eines Zählwerks angeordnet werden und läßt aufgrund ihrer geringen Herstellungskosten und der leichten Ergänzbarkeit und Zugänglichkeit während des Montageprozesses die Ausrüstung sämtlicher Zähler ohne erhebliche Mehrkosten zu, so daß jeder Zähler, auch wenn er schon installiert ist, gewünschtenfalls und auch nachträglich mit einem Impulsempfänger und einer Fernanzeigeeinrichtung oder mit einer Impulsauswertung, die für Stichtagsablesung geeignet ist, nachgerüstet werden kann.

Die Magnetschalter und die diesen nachgeschaltete Elektronik können in bekannter Weise so ausgebildet sein, daß sie das Störmagnetfeld über die Betriebszustandsauswertung ermitteln und die Manipulation anzeigen. Da die erfindungsgemäßen Impulsgeberausführungen unaufwendig sind, können sie unabhängig davon vorgesehen werden, ob der jeweilige Zähler tatsächlich mit einem Impulsempfänger 10 ausgestattet wird.

Bei der in Fig. 2 gezeigten Abwandlung der ersten Ausführungsform sitzt die Mitnehmerscheibe 21 auf der Nabe 22 einer Ziffernrolle 23. Auch in diesem Falle wird der Impulsgeber 13 vom Innenumfang der Ziffernrolle 23 geführt. Zweckmäßigerweise handelt es sich bei dieser um die Anlaufrolle; das ist die Ziffernrolle mit der größten Umdrehungszahl. Dann ist nämlich die Impulszahl am größten. Wenn die Impulszahl keine Rolle spielt, kann auch eine mit geringerer Frequenz umlaufende Rolle gewählt werden, was den Vorteil hat, daß ein etwaiges Rest-Kupplungsmoment sowie das Schaltmoment das Ergebnis während kürzerer Zeitperioden beeinflussen und insgesamt entsprechend weniger ins Gewicht fällt. Die die Mitnehmerscheibe 21 tragende Nabe 22 läuft zweckmäßigerweise lose auf der Welle 3.

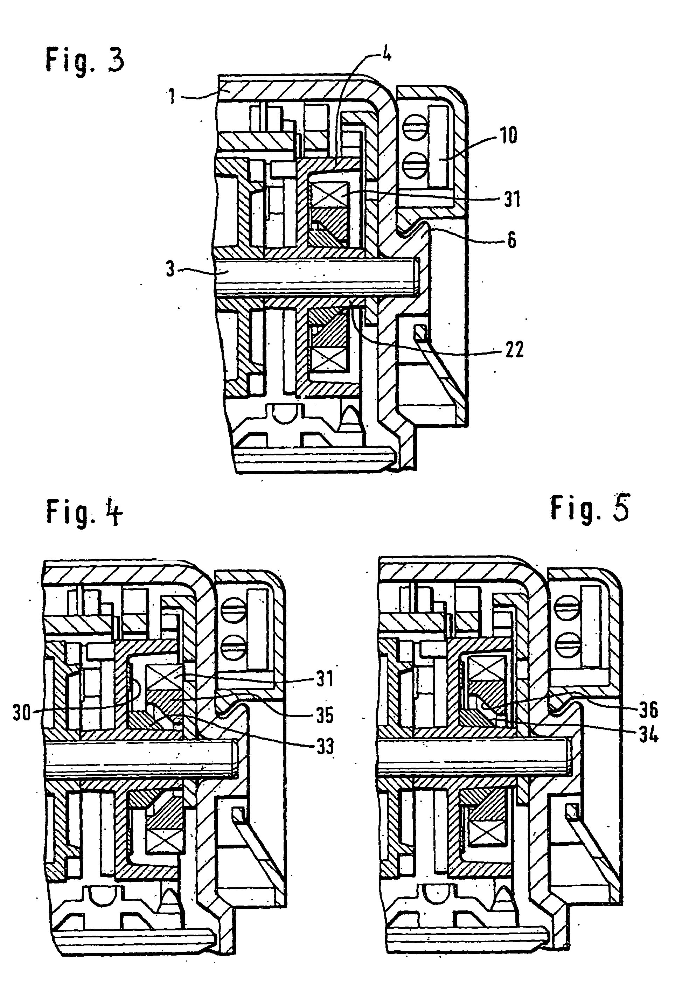

Wegen der Erläuterung derjenigen Teile, die in den Fig. 3 bis 5 dieselben Bezugsziffern tragen wie diejenigen in den Fig. 1 und 2 wird auf die vorstehenden Erläuterungen verwiesen. Innerhalb der Zahlenrolle 4 ist auf deren Radialfläche eine Ringscheibe 30 fest aufgesetzt, beispielsweise aufgeklebt. Sie stellt den zählwerksseitigen Kupplungsteil dar, der zusammenwirkt mit dem impulsgeberseitigen Kupplungsteil, nämlich unmittelbar mit dem permanentmagnetischen Ring 31, der den Impulsgeber bildet. Auf die Nabe 22 der Zahlenrolle 4 ist ein Konusnabenring 33 aufgesetzt, der sich durch eine Konusfläche 34 auszeichnet, deren Durchmesser sich in der von der Ringscheibe 30 wegstrebenden Richtung verringert. In den Impulsgeberring 31 ist ein Konusbohrungsring 35 fest eingesetzt, der eine Konusbohrung 36 enthält. Der geringste Durchmesser der Bohrung ist größer als der Außendurchmesser der Nabe 22. Die axiale Lage und die Durchmesser der Konusflächen 34, 36 sind so gewählt, daß sie in eingekuppeltem Zustand der Kupplung, der in Fig. 3 gezeigt ist, nahe beieinanderliegen; ein unmittelbarer Kontakt ist nicht erforderlich.

Falls ein Störmagnetfeld in axialer Richtung von rechts in der Zeichnung her einwirkt, verschiebt sich der impulsgeberseitige Kupplungsteil 31, 35 axial nach rechts, wie dies in Fig. 4 gezeigt ist. Dies entspricht dem Vorgang, der oben bereits unter Bezugnahme auf Fig. 1 und 2 beschrieben wurde. Wenn ein Störfeld radial oder mit starker radialer Komponente einwirkt, wird der impulsgeberseitige Kupplungsteil 31, 35 aus der in Fig. 3 gezeigten Kupplungsstellung heraus mit einer radialen Kraft beaufschlagt, die dazu führt, daß er sich radial verschiebt. Diese radiale Verschiebung folgt der Richtung der zusammenwirkenden Konusflächen 34, 36 und hat daher eine axiale Komponente, die den impulsgeberseiten Kupplungsteil 31, 35 axial nach rechts führt und dadurch von der Ringscheibe 30 abhebt. Auch bei radial einwirkendem Störfeld führt dies also zu einer Lösung der normalerweise unter Reibkraft aneinander haftenden Kupplungsflächen voneinander. Zwar liegen die Kupplungsteile im Bereich der Konusflächen 34, 36 noch teilweise aneinander; jedoch wird dadurch kein wesentliches Störmoment übertragen. Das Zählwerk kann daher seine Drehung auch bei geringen Antriebsmomenten fortsetzen, auch wenn der Impulsgeber 31 durch das Störfeld festgehalten werden sollte.

Es ist nicht erforderlich, daß die an den Ringen 33, 35 zusammenwirkenden Schrägflächen 34, 36 wellennah angeordnet sind; sie könnten vielmehr auch radial außen an der Zahlenrolle 4 und dem Impulsgeber 31 vorgesehen sein. Zu bevorzugen ist aber die wellennahe Anordnung, weil dort wegen des geringeren Hebelarms nur geringere Störmomente übertragen werden können, wenn der Impulsgeber 31 durch ein Störfeld festgehalten wird.

Es ist nicht erforderlich, daß die Flächen an beiden Kupplungsteilen konisch sind; vielmehr würde das Zusammenspiel einer konischen Fläche mit einer beliebig geformten, damit zusammenwirkenden Fläche am anderen Teil ausreichen.

Endet das Störfeld, so sorgt die magnetische Anziehung zwischen dem Impulsgeberring 31 und der Ringscheibe 30 dafür, daß die Kupplungsteile wieder in den Kupplungszustand gemäß Fig. 3 zurückfallen. Die Konusflächen 34, 36 wirken dabei zentrierend.

## Patentansprüche

1. Verbrauchszähler mit einem von einem Verbrauchsgeber (5) mit einem vorbestimmten Mindestantriebsmoment angetriebenen, mechanischen Zählwerk (2, 3, 4), mit dem ein magnetischer Impulsgeber (7, 13, 31) über eine normalerweise schlupffreie Kupplung (7, 9; 11, 13; 30, 31) verbunden ist, **dadurch gekennzeichnet, daß** der impulsgeberseitige Kupplungsteil (13, 31) durch eine nachgiebige Kraft an dem zählwerksseitigen Kupplungsteil (11, 30) derart gehalten ist, daß er sich unter der Einwirkung eines äußeren Magnetfelds von diesem löst und das Kupplungsmoment geringer als das dem Mindestantriebsmoment entsprechende Moment wird.

2. Zähler nach Anspruch 1, **dadurch gekennzeichnet, daß** die nachgiebige Kraft von dem als Permanentmagnet ausgebildeten Impulsgeber (13, 31) erzeugt ist.

3. Zähler nach Anspruch 1 oder 2, **dadurch gekennzeichnet, daß** die Kupplungsteile schräg verlaufende Führungsflächen (34, 36) aufweisen, entlang denen sie bei relativer Radialverschiebung mit einer axialen Bewegungskomponte unter Trennung ihrer im Kupplungszustand aneinanderliegenden Kupplungsflächen gleiten.

## Claims

1. A consumption meter with a mechanical counting mechanism (2,3,4) driven by a consumption transducer (5) with a predetermined minimum drive torque, to which a magnetic pulse generator (7,13,31) is connected via a normally slip-free coupling (7,9; 11,13; 30,31), **characterised in that** the coupling part (13,31) on the pulse generator side is so retained by a resilient force on the coupling part (11,30) on the counting mechanism side that it is released therefrom under the action of an external magnetic field and the coupling torque is lower than the torque corresponding to the minimum drive torque.

2. A meter according to Claim 1, **characterised in that** the resilient force generated by the pulse generator (13,31) is in the form of a permanent magnet.

3. A meter according to Claim 1 or 2, **characterised in that** the coupling parts have obliquely extending guide surfaces (34,36), along which they slide with relative radial displacement with an axial movement component with separation of their coupling surfaces which are mutually adjacent in the coupling position.

## Revendications

1. Compteur de consommation comportant un mécanisme de comptage (2, 3, 4) entraîné par un transmetteur de consommation (5) avec un moment d'entraînement minimal prédéterminé, auquel un transmetteur d'impulsions magnétiques (7, 13, 31) est relié par un accouplement (7, 9 ; 11, 13 ; 30 31) normalement sans glissement, **caractérisé en ce que** la partie d'accouplement (13, 31) côté transmetteur d'impulsions est maintenue par une force souple contre la partie d'accouplement (11, 30) côté mécanisme de comptage, de manière que, sous l'action d'un champ magnétique extérieur, elle se sépare de celle-ci et que le moment d'accouplement soit inférieur au moment qui correspond au moment d'entraînement minimal.

2. Compteur selon la revendication 1, **caractérisé en ce que** la force souple est produite par le transmetteur d'impulsions (13, 31) réalisé comme aimant permanent.

3. Compteur selon la revendication 1 ou 2, **caractérisé en ce que** les parties d'accouplement présentent des surfaces de guidage (34, 36) s'étendant obliquement, le long desquelles elles glissent avec coulissement radial relatif et composantes de mouvement axial, en séparant leurs surfaces d'accouplement s'appliquant l'une contre l'autre à l'état d'accouplement.
